# EUROPEAN PATENT APPLICATION

(11) **EP 4 683 070 A1**
(43) Date of publication of application: **21.01.2026**
(21) Application number: 25161645.4
(22) Date of filing: 04.03.2025
(51) Int. Cl.: H01M 50/242, H01M 50/207, H01M 50/291, H01M 50/262

(54) **BOX PROTECTION STRUCTURE AND BATTERY PACK**

(30) Priority: 09.08.2024 WO PCT/CN2024/110934; 17.07.2024 CN 202421669913 U
(71) Applicant: Eve Energy Co., Ltd., Huizhou, Guangdong 516006 (CN)
(72) Inventor: HUANG, Shenhua, Huizhou, 516006 (CN)
(74) Representative: HGF

(57) **Abstract**

A box protection structure includes a bottom protection plate (120), a battery module (500) placed on the bottom protection plate (120), a reinforcing plate (200) disposed on a side of the bottom protection plate (120) facing away from the battery module (500), and buffer blocks (300) disposed on a side of the bottom protection plate (120) facing the battery module (300). The buffer blocks (300) are disposed between the battery module (500) and the bottom protection plate (120). The reinforcing plate (200) includes multiple support portions (210) and multiple connection portions (220) which are alternately distributed and connected to each other. The multiple support portions (210) and the bottom protection plate (120) are disposed at intervals, the connection portions (220) abut against the bottom protection plate (120), and the buffer blocks (300) are disposed corresponding to positions of the connection portions (220).

## Description

### TECHNICAL FIELD

The present application relates to the technical field of battery devices, for example, a box protection structure and a battery pack.

### BACKGROUND

With the rapid development of the new energy battery industry, the requirements for the safety of the battery are becoming increasingly high. In long-term use of a battery pack of an electric vehicle, the physical strength and the anti-collision impact strength of the battery pack are becoming increasingly important. However, in the general use process, the bottom of the battery pack is mounted and fixed to an external electric device such as an electric vehicle, so the battery pack is mainly subjected to collision and impact substantially from the bottom of the battery pack.

### Technical problem

If a box structure of the battery pack only adopts the common design, and the bottom of the box structure is not subjected to the special protection design, so that the box structure only plays a role of serving as the carrier and the container of the battery module, and the protection effect on the battery module is general, whereby an event of fire or even explosion of the battery pack is caused due to damage or breakage to the bottom of the box structure of the battery pack in the large number of new energy vehicles, and the life and property safety of drivers and passengers are seriously endangered.

### SUMMARY

### Technical solution

The present application provides a box protection structure, which effectively improves the impact-resistance strength of a bottom protection plate, and improves the protection effect on a battery module.

The present application provides a battery pack, which effectively improves the protection effect on the battery module and improves the safety of the overall battery pack.

In one aspect, embodiments of the present application provide a box protection structure. The box protection structure includes a bottom protection plate, a battery module placed on the bottom protection plate, a reinforcing plate disposed on a side of the bottom protection plate facing away from the battery module, and buffer blocks disposed on a side of the bottom protection plate facing the battery module. The buffer blocks are disposed between the battery module and the bottom protection plate. The reinforcing plate includes multiple support portions and multiple connection portions which are alternately distributed and connected to each other. The multiple support portions and the bottom protection plate are disposed at intervals, the connection portions abut against the bottom protection plate, and the buffer blocks are disposed corresponding to positions of the connection portions.

In another aspect, embodiments of the present application provide a battery pack. The battery pack includes a box body. The box body includes the box protection structure described above, and a placement cavity for placing the battery module and the buffer blocks is disposed within the box body.

### Beneficial effects

The beneficial effects of the present application are as follows. According to the box protection structure of the present application, the reinforcing plate is disposed on an outer side of the bottom protection plate to effectively protect and reinforce the bottom protection plate, thereby improving the impact resistance of the overall bottom structure of the box body, effectively protecting the protection performance of the overall structure of the battery pack, and ensuring the normal operation of the battery pack. The buffer blocks are disposed on the side of the bottom protection plate facing the battery module, and the buffer blocks are disposed between the battery module and the bottom protection plate, so that the effect of buffering and absorbing the impact energy is achieved through the buffer blocks, whereby the effect of buffering and absorbing the energy of the battery module is achieved, the impact energy transmitted to the battery module after the bottom protection plate is impacted is reduced, the magnitude and possibility of damage and breakage of the battery module are reduced, and the effective protection of the battery module is achieved. The buffer blocks are correspondingly disposed at connection positions between the connection portions of the reinforcing plate and the bottom protection plate, and these positions are located on force conduction paths, so that the energy absorption efficiency of the buffer blocks is improved, and the protection performance of the overall structure is improved.

### BRIEF DESCRIPTION OF THE DRAWINGS

FIG. 1 is a schematic structural diagram of a battery pack according to one or more embodiments of the present application;
FIG. 2 is a schematic exploded structural diagram of a box protection structure according to one or more embodiments of the present application;
FIG. 3 is a schematic diagram showing a partial structural of a side surface of a box protection structure according to one or more embodiments of the present application;
FIG. 4 is a schematic cross-sectional structural diagram of a box protection structure according to one or more embodiments of the present application;
FIG. 5 is a schematic enlarged structural diagram of part A of FIG. 4;
FIG. 6 is a schematic cross-sectional structural diagram of a bottom protection plate according to one or more embodiments of the present application;
FIG. 7 is a schematic structural diagram of a buffer plate and a connection bracket according to one or more embodiments of the present application;
FIG. 8 is a schematic structural diagram of a reinforcing plate according to one or more embodiments of the present application; and
FIG. 9 is a schematic structural diagram of a holder according to one or more embodiments of the present application.

### List of reference numbers

- 1: battery pack
- 100: box body
- 110: placement cavity
- 120: bottom protection plate
- 121: base plate
- 1211: infiltration hole
- 122: buffer plate
- 123: connection bracket
- 124: first mounting hole
- 130: frame
- 131: second mounting hole
- 140: cover plate
- 141: third mounting hole
- 150: pressure relief cavity
- 200: reinforcing plate
- 210: support portion
- 220: connection portion
- 230: buffer layer
- 240: buffer channel
- 300: buffer block
- 400: holder
- 410: avoidance through hole
- 500: battery module

### DETAILED DESCRIPTION

The present application will be described in detail below in conjunction with the accompanying drawings and the embodiments. It is to be understood that the specific embodiments described herein are used for explaining the present application and are not intended to limit the present application. It is also to be noted that, for ease of description, only some, but not all, of the structures related to the present application are shown in the accompanying drawings.

In the description of the present application, unless otherwise expressly specified and limited, the term "connected to each other", "connected", or "fixed" is to be construed in a broad sense. For example, the term "connected" may refer to "fixedly connected" or "detachably connected" or "integrally connected", may refer to "mechanically connected" or "electrically connected", or may refer to "connected directly", "connected indirectly through an intermediary" or "internal connection between two elements, or interaction between two elements ". For those of ordinary skill in the art, meanings of the preceding terms in the present application may be understood based on situations.

In the present application, unless otherwise expressly specified and limited, a first feature being "on" or "under" a second feature may include the first feature and the second feature being in direct contact, or may include the first feature and the second feature not being in direct contact but being in contact with each other through an additional feature therebetween. Moreover, the first feature being "on", "above" or "over" the second feature includes the first feature being directly on, above or over and obliquely on, above or over the second feature, or simply indicates that the first feature is at a higher level than the second feature. The first feature being "under", "below" or "underneath" the second feature includes the first feature being directly under, below or underneath and obliquely under, below or underneath the second feature, or simply represents that the first feature is at a lower level than the second feature.

In the description of the embodiments, the orientational or positional relationships indicated by terms "above", "below", "right", and the like are based on the orientational or positional relationships shown in the accompanying drawings, and are merely for ease of description and simplifying an operation, rather than indicating or implying that the referred device or element must have a specific orientation and be constructed and operated in a specific orientation; therefore, they should not be construed as limiting the present application. Moreover, the terms "first" and "second" are used only to distinguish between descriptions and have no special meaning.

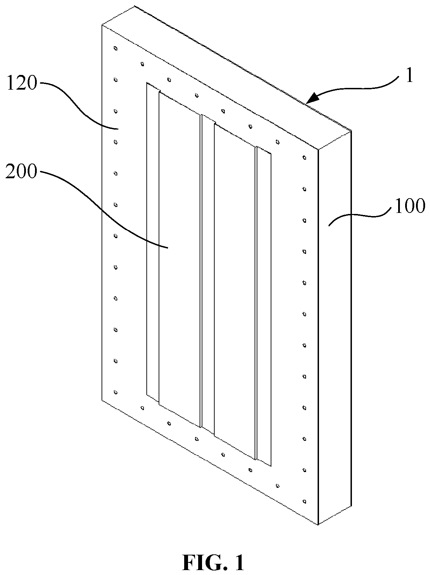

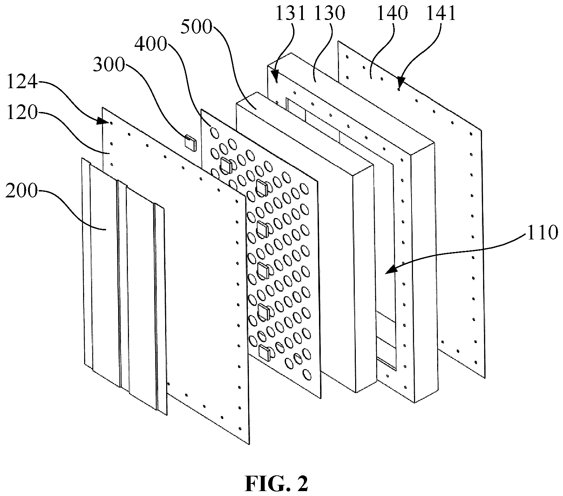

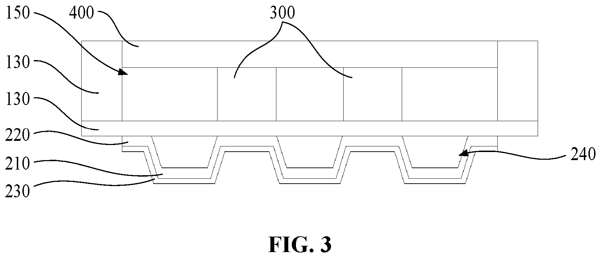

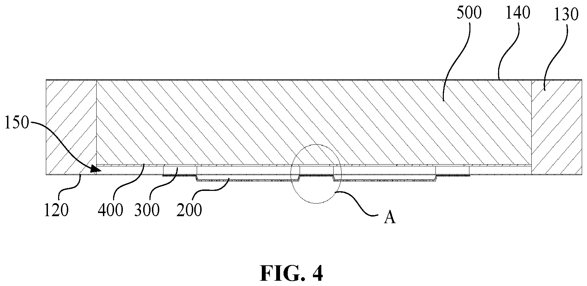

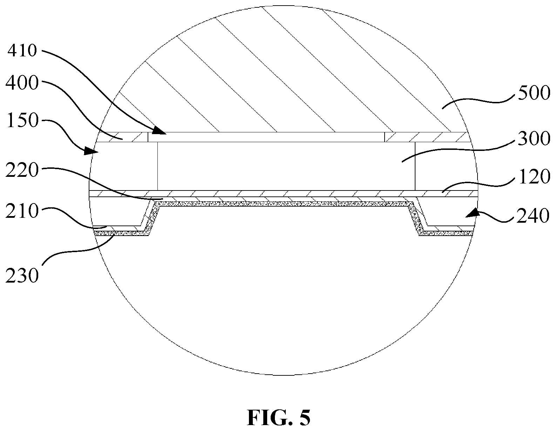

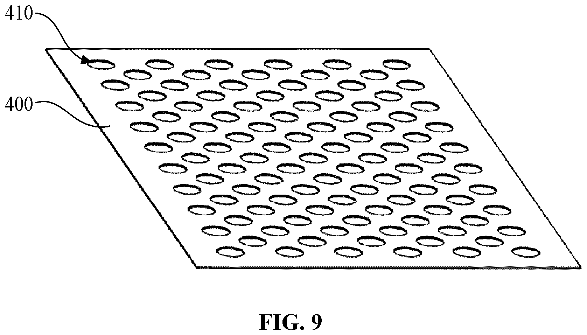

As shown in FIG. 1 to FIG. 9, a box protection structure of the embodiments includes a bottom protection plate 120, a battery module 500 placed on the bottom protection plate 120, a reinforcing plate 200 disposed on a side of the bottom protection plate 120 facing away from the battery module 500, and buffer blocks 300 disposed on a side of the bottom protection plate 120 facing the battery module 500. The buffer blocks 300 are disposed between the battery module 500 and the bottom protection plate 120. The reinforcing plate 200 includes multiple support portions 210 and multiple connection portions 220 which are alternately distributed and connected to each other. The support portions 210 and the bottom protection plate 120 are disposed at intervals, the connection portions 220 abut against the bottom protection plate 120, and the buffer blocks 300 are disposed corresponding to positions of the connection portions 220.

In one or more embodiments, the reinforcing plate 200 is disposed on an outer side of the bottom protection plate 120 to effectively protect and reinforce the bottom protection plate 120, thereby improving the impact resistance of the overall bottom structure of the box body 100, effectively protecting the protection performance of the overall structure of the battery pack, and ensuring the normal operation of the battery pack. The buffer blocks 300 are disposed on the side of the bottom protection plate 120 facing the battery module 500, and the buffer blocks 300 are disposed between the battery module 500 and the bottom protection plate 120, so that the effect of buffering and absorbing the impact energy is achieved through the buffer blocks 300, whereby the effect of buffering and absorbing the energy of the battery module 500 is achieved, the impact energy transmitted to the battery module 500 after the bottom protection plate 120 is impacted is reduced, the possibility of damage and breakage of the battery module 500 is reduced, and the effective protection of the battery module 500 is achieved. The buffer blocks 300 are correspondingly disposed at connection positions between the connection portions 220 of the reinforcing plate 200 and the bottom protection plate 120, and these positions are located on force conduction paths, so that the energy absorption efficiency of the buffer blocks 300 is improved, and the protection performance of the overall structure is improved.

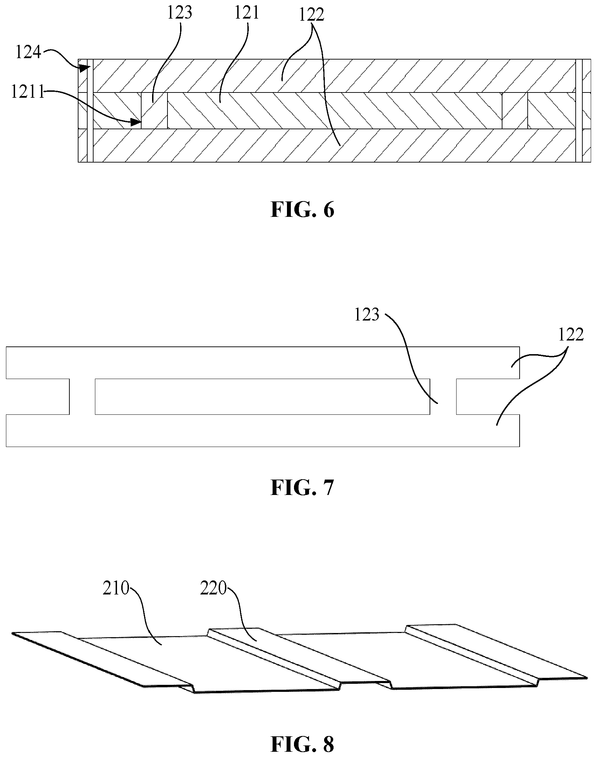

In one or more embodiments, as shown in FIG. 6 to FIG. 7, the bottom protection plate 120 includes a base plate 121 and two buffer plates 122 disposed on two sides of the base plate 121 in a thickness direction, multiple infiltration holes 1211 penetrating through the base plate 121 are disposed on the base plate 121, connection brackets 123 are disposed within the multiple infiltration holes 1211, and the two buffer plates 122 on the two sides of the base plate 121 are connected through the connection brackets 123 respectively. The multiple infiltration holes 1211 are uniformly distributed on the base plate 121, to ensure that the two buffer plates 122 on the two sides of the base plate 121 are securely connected to the connection brackets 123, and ensure that the two buffer plates 122 on the two sides of the base plate 121 are uniformly stressed as much as possible, thereby facilitating improvement of the overall impact resistance of the bottom protection plate 120 and improvement of the protection effect of the bottom protection plate 120.

In one or more embodiments, the two buffer plates 122 on the two sides of the base plate 121 are respectively fixedly connected to the connection brackets 123 to form a whole, and the two buffer plates 122 on the two sides of the base plate 121 and the connection brackets 123 are integrally injection molded, so that it is conducive to ensuring that the bottom protection plate 120 with a sandwich structure is formed by a protection structure, formed by the two buffer plates 122 on the two sides of the base plate 121 and the connection brackets 123, and the base plate 121; therefore, the structure of such bottom protection plate 120 is firmer, the impact resistance of the bottom protection plate 120 is improved, and the protection effect of the bottom protection plate 120 is improved.

In an actual operation, the buffer plate 122 is a polyurethane buffer plate or a modified epoxy resin buffer plate, the polyurethane buffer plate and the modified epoxy resin buffer plate have very strong polarity, and have relatively high strength after being cured, so that the bottom protection plate 120 has better impact resistance, thereby improving the protection effect of the bottom protection plate 120. Of course, in addition to the embodiments, the buffer plate 122 made of other materials may also be used, as long as the impact resistance of the bottom protection plate 120 is improved to improve the protection effect of the bottom protection plate 120, and such designs all fall within the scope of protection of the present application.

In one or more embodiments, the reinforcing plate 200 is in a wave shape, a protrusion on a side of the wave-shaped reinforcing plate 200 facing the bottom protection plate 120 is the connection portion 220, a protrusion on a side of the wave-shaped reinforcing plate 200 facing away from the bottom protection plate 120 is the support portion 210, and a buffer channel 240 is formed between the support portion 210 and the bottom protection plate 120. When the bottom of the battery pack is impacted, the support portion 210 is firstly impacted since the support portion 210 faces outwards and in contact with an external device, the impact force is conducted to the connection portion 220 along a joint of the support portion 210 and the connection portion 220, and then is sequentially conducted to the bottom protection plate 120, the buffer blocks 300 and the battery module 500 through the connection portion 220, so that the influence on the battery module 500 upon impacting the bottom of the battery pack is greatly reduced in a layer-by-layer protection manner, which is conducive to protecting the battery module 500 from being damaged or broke, and thus ensuring the safety of the battery module 500. When the support portion 210 is impacted, the buffer channel 240 is formed due to the support portion 210 and the bottom protection plate 120 disposed at intervals, so that the buffer effect on impact is achieved to a certain extent, and the impact force is prevented from being directly transmitted to the bottom protection plate 120 through the support portion 210.

In addition to the embodiments, the reinforcing plate 200 in other structural forms such as a pulse shape may also be used, as long as the protection and conductive effects of the reinforcing plate 200 in the embodiments are achieved, and such designs all fall within the scope of protection of the present application.

In one or more embodiments, a buffer layer 230 is disposed on a side of the reinforcing plate 200 facing away from the bottom protection plate 120 to improve the impact resistance of the reinforcing plate 200 and improve the protection effect of the reinforcing plate 200 on the bottom protection plate 120. The buffer layer 230 is a PVC buffer layer, and one PVC buffer layer is operated to be sprayed on the bottom of the reinforcing plate 200, so that the noise is effectively reduced, and a certain buffering and energy absorption effect is achieved.

In one or more embodiments, multiple buffer blocks 300 are provided, and the multiple buffer blocks 300 are distributed in a matrix within the placement cavity 110 in a length direction of the connection portion 220, so that the impact energy conducted by the connection portion 220 is uniformly absorbed by the buffer blocks 300, to avoid that an effective protection effect is not achieved due to the poor local energy absorption effect.

In an actual operation, the buffer blocks 300 are made of a hard buffer material, such as PU, EPP, EPA or PPE, so that the buffer blocks 300 have the excellent energy absorption effect. Of course, other energy absorption materials may also be used, as long as the energy absorption property and the energy absorption effect of the buffer blocks 300 are ensured, and such designs all fall within the scope of protection of the present application.

In one or more embodiments, the box protection structure further includes a holder 400, the holder 400 is disposed within the placement cavity 110, the holder 400 is disposed between the battery module 500 and the buffer blocks 300, the battery module 500 is supported by the holder 400, and the battery module 500 is placed on the holder 400 and is disposed to be spaced apart from the bottom protection plate 120 through the buffer blocks 300, so that an impact force transmitted to the battery module 500 after impacting the bottom protection plate 120 is effectively reduced, and thus the protection effect on the battery module 500 is improved. The holder 400 is provided with avoidance through holes 410 corresponding to pressure relief valves on the battery module 500, to facilitate installation and fixation of the battery module 500 and avoid affecting the normal pressure relief of the battery module 500.

In one or more embodiments, the holder 400 is disposed to be spaced apart from the bottom protection plate 120 through the buffer blocks 300 to form pressure relief cavities 150, and the pressure relief valves communicate with the pressure relief cavities 150 through the avoidance through holes 410 respectively. The pressure relief spaces of the battery module 500 are reserved through the pressure relief cavities 150, so that a condition that the box body 100 expands or even explodes and is damaged due to excessive pressure within the placement cavity 110 during pressure relief of the battery module 500 is reduced, and thus the safety performance of the battery pack is improved.

As shown in FIG. 1 to FIG. 9, embodiments of the present application further provide a battery pack 1. The battery pack 1 includes a box body 100, the box body 100 includes the box protection structure, and the box body 100 is provided with a placement cavity 110 for placing the battery module 500 and the buffer blocks 300. Therefore, the box body 100 of the battery pack 1 in the embodiments has good bottom support and protection effects, so that the collision and impact from the bottom of the battery pack 1 are effectively buffered and protected, the influence of this part of collision and impact on the battery module 500 inside the battery pack 1 is reduced, the safety performance of the battery pack 1 is ensured, an event of fire or even explosion of the battery pack 1 due to damage or breakage to the bottom of the battery pack 1 is reduced, and the life and property safety of drivers and passengers is advantageously ensured.

In one or more embodiments, the box body 100 further includes a frame 130 and a cover plate 140. The bottom protection plate 120, the frame 130 and the cover plate 140 are connected to each other to form a sealed placement cavity 110, and the battery module 500 is loaded and sealed through the bottom protection plate 120, the frame 130 and the cover plate 140 and thus protected, so that the overall structure of the battery pack is ensured to be firm and stable, and the safety performance of the battery pack is improved. First mounting holes 124 are disposed on the bottom protection plate 120, second mounting holes 131 are disposed on the frame 130, and third mounting holes 141 are disposed on the cover plate 140, so that the bottom protection plate 120, the frame 130 and the cover plate 140 are connected and fixed by using fasteners such as bolts penetrating through the first mounting holes 124, the second mounting holes 131 and the third mounting holes 141.

In the embodiments, the buffer plate 122 and the connection bracket 123 are formed on two sides of the base plate 121 by integrally injection molding, so that the adhesive film is laid on the bottom protection plate 120 in the normal manufacturing, which is conducive to reducing the production cost and the thickness of the bottom protection plate 120, and also facilitates the subsequent adhesion of the bottom protection plate 120 to structures such as the frame 130 or the external bracket.

## Claims

1. A box protection structure, comprising:
a bottom protection plate (120);
a battery module (500) placed on the bottom protection plate (120);
a reinforcing plate (200) disposed on a side of the bottom protection plate (120) facing away from the battery module (500); and
buffer blocks (300) disposed on a side of the bottom protection plate (120) facing the battery module (500);
wherein the buffer blocks (300) are disposed between the battery module (500) and the bottom protection plate (120), the reinforcing plate (200) comprises a plurality of support portions (210) and a plurality of connection portions (220) which are alternately connected to each other, the plurality of support portions (210) and the bottom protection plate (120) are disposed at intervals,
the plurality of connection portions (220) abut against the bottom protection plate (120), and the buffer blocks (300) are disposed corresponding to positions of the plurality of connection portions (220).

2. The box protection structure of claim 1, wherein the bottom protection plate (120) comprises a base plate (121) and two buffer plates (122) disposed on two sides of the base plate (121) in a thickness direction;
a plurality of infiltration holes (1211) penetrating through the base plate (121) are disposed on the base plate (121);
connection brackets (123) are disposed within the plurality of infiltration holes (1211); and
the two buffer plates (122) on the two sides of the base plate (121) are connected through the connection brackets (123).

3. The box protection structure of claim 1, wherein the plurality of infiltration holes (1211) are uniformly distributed on the base plate (121).

4. The box protection structure of claim 2, wherein the two buffer plates (122) on the two sides of the base plate (121) are respectively fixedly connected to the connection brackets (123) to form a whole.

5. The box protection structure of claim 4, wherein the two buffer plates (122) on the two sides of the base plate (121) and the connection brackets (123) are integrally injection molded.

6. The box protection structure of any one of claims 1 to 5, wherein the reinforcing plate (200) is in a wave shape;
a protrusion on a side of the wave-shaped reinforcing plate (200) facing the bottom protection plate (120) is a connection portion (220) of the plurality of connection portions (220);
a protrusion on a side of the wave-shaped reinforcing plate (200) facing away from the bottom protection plate (120) is a support portion (210) of the plurality of support portions (210); and
a buffer channel (240) is formed between the support portion (210) and the bottom protection plate (120).

7. The box protection structure of any one of claims 1 to 5, wherein the reinforcing plate (200) is in a pulse shape.

8. The box protection structure of any one of claims 1 to 7, wherein a buffer layer (230) is disposed on a side of the reinforcing plate (200) facing away from the bottom protection plate (120).

9. The box protection structure of any one of claims 1 to 8, wherein a plurality of buffer blocks (300) are provided, and the plurality of buffer blocks (300) are distributed in a matrix.

10. The box protection structure of claim 9, wherein the plurality of buffer blocks (300) are made of a hard buffer material, or an energy absorption material.

11. The box protection structure of any one of claims 1 to 10, further comprising a holder (400), wherein the holder (400) is disposed between the battery module (500) and the buffer blocks (300); and
avoidance through holes (410) disposed corresponding to pressure relief valves on the battery module (500) is disposed on the holder (400).

12. The box protection structure of claim 11, wherein the holder (400) and the bottom protection plate (120) are spaced apart from each other through the buffer blocks (300) to form pressure relief cavities (150); and
the pressure relief valves communicate with the pressure relief cavities (150) through the avoidance through holes (410).

13. A battery pack, comprising a box body (100), wherein the box body (100) comprises the box protection structure of any one of claim 1 to 12, and a placement cavity (110) for placing the battery module (500) and the buffer blocks (300) is disposed within the box body (100).

14. The battery pack of claim 13, wherein the box body (100) further comprises a frame (130) and a cover plate (140), and the bottom protection plate (120), the frame (130) and the cover plate (140) are connected to each other to form the placement cavity (110) which is sealed.

15. The battery pack of claim 14, wherein a plurality of first mounting holes (124) are disposed on the bottom protection plate (120), a plurality of second mounting holes (131) are disposed on the frame (130), and a plurality of third mounting holes (141) are disposed on the cover plate (140), and the bottom protection plate (120), the frame (130) and the cover plate (140) are connected and fixed by using fasteners penetrating through the first mounting holes (124), the second mounting holes (131) and the third mounting holes (141).
